# EUROPEAN PATENT APPLICATION

(11) **EP 1 354 735 A1**
(43) Date of publication of application: **22.10.2003**
(21) Application number: 03252431.6
(22) Date of filing: 16.04.2003
(51) Int. Cl.: B60H 1/00

(54) **Vehicle air conditioning system**

(30) Priority: 16.04.2002 GB 0208770
(71) Applicant: Calsonic Kansei UK Limited, Llanelli, Carmarthenshire SA14 8HU (GB)
(72) Inventor: Thomas, Gwyn, Llanelli, Carmarthenshire SA15 4RY (GB)
(74) Representative: Davies, Gregory Mark

(57) **Abstract**

A vehicle air conditioning system has a refrigerant circuit including a compressor (5), an evaporator (3) and a condenser (4). Benefits accrue where the refrigerant circuit (compressor, evaporator and condenser)is pre-assembled as a unit precharged with refrigerant and sealed, for fitment in the vehicle; and/or mounted with a common support platform (2) positioned proximal the bulkhead separating the cabin-side and engine compartment-side of the vehicle.

## Description

The present invention relates to a vehicle air conditioning system, and in particular to a system comprising a refrigerant circuit having a compressor, evaporator and condenser.

Typically, the components of the refrigerant circuit used in a vehicle air conditioning system are supplied as component parts and assembled at the vehicle production line. The refrigerant circuit is then charged with the refrigerant.

An improved arrangement has now been defined.

According to a first aspect, the present invention provides a vehicle air conditioning system having a refrigerant circuit comprising a compressor, an evaporator and a condenser, wherein:
i) the refrigerant circuit comprising the compressor evaporator and condenser are pre-assembled as a unit pre-charged with refrigerant and sealed, for fitment in the vehicle; and/or
ii) the refrigerant circuit comprising the compressor, evaporator and condenser are mounted with a common support platform positioned proximal the bulkhead separating the cabin-side and engine compartment-side of the vehicle.

It is preferred that the evaporator is positioned cabin-side of the vehicle and the condenser is positioned engine compartment-side of the vehicle.

Beneficially the compressor comprises an electrically driven compressor.

It is preferred that the condenser is a liquid cooled condenser, more preferably a water cooled condenser. This provides that the condenser can be mounted conveniently. Air cooled condensers would require specific positioning within the engine compartment due to air-flow requirements.

Beneficially the refrigerant circuit includes expansion means, for expansion of the refrigerant. The expansion means may comprise an expansion valve or orifice tube or plate arrangement.

The common support platform is preferably provided with a refrigerant conduit network to direct refrigerant between the condenser, compressor and evaporator (all of which are beneficially mounted to the support platform). The refrigerant conduit network is beneficially formed integrally with the support platform. This is beneficially achieved by conduit formations provided at the interface between face abutting elements comprising the support platform. Depressions or slots may be formed in one or more abutting elements to provide such formations. Beneficially, the refrigerant conduit network is therefore provided internally of the support platform.

Beneficially the refrigerant conduit network of the support platform includes expansion means for expansion of the refrigerant.

It is preferred that the support platform is secured to (or comprises) the bulkhead separating the cabin-side from the engine compartment-side of the vehicle.

It is preferred that the air conditioning system according to the invention includes a cabin-air flow directing casing or shroud mounted to (or formed integrally with) the pre-assembled unit.

According to a further aspect, the present invention provides a method of manufacturing a vehicle air conditioning system comprising:
i) pre-assembling a unit comprising refrigerant circuit including a compressor, evaporator and condenser;
ii) charging the refrigerant circuit with refrigerant and sealing; and
iii) fitting the unit in the vehicle.

Beneficially the cooling connections to the condenser are made during or subsequent to fitment of the unit in the vehicle.

The condenser is preferably a liquid (preferably water) cooled condenser, the liquid coolant connection being made during or subsequent to fitment of the unit in the vehicle.

Beneficially the compressor comprises an electrically driven compressor, the electrical connection to the compressor being made during, or subsequent to, fitment of the unit in the vehicle. The unit is preferably mounted proximate the bulkhead separating the cabin-side and engine compartment-side of the vehicle. Beneficially the unit includes a common support platform to which the compressor, condenser and evaporator are mounted during pre-assembly of the unit (prior to fitment in the vehicle) . The support platform is beneficially formed from separate facing elements having formations arranged to define a refrigerant conduit flow network (as previously described).

The air conditioning system and method of manufacture according to the invention enables a hermetically sealed refrigerant circuit unit to be assembled, charged with a refrigerant and supplied for installation in the vehicle as a hermetically sealed unit. Only external services (such as electrical supply, water coolant and the like) are required for subsequent connection when the unit/system is fitted in the vehicle.

This addresses many of the problematic issues presently in the art such as refrigerant losses in in-situ charged air conditioning systems. Potential refrigerant leak paths are minimised and in-factory sealing of the unit provides better sealing than in-situ connection and sealing using systems employing jointed flexible hoses and the like.

Additionally, the unit and system provides benefits in relation to the compactness of the system/unit and minimises the amount of refrigerant required to charge the system (in view of the fact that interconnecting hoses and the like are minimised). The system is suitable for use with either a thermal expansion valve or orifice tube (orifice plate) evaporator control.

The system/unit can be mounted to the vehicle bulkhead either from the engine-side of the vehicle or from the cabin-side of the vehicle.

The invention will now be further described, by way of example only, and with reference to the accompanying drawings in which:
Figure 1 is a schematic view of a vehicle air conditioning system/unit in accordance with the invention;
Figure 2 is a perspective view of an exemplary embodiment of a system/unit in accordance with the invention;
Figure 3 is an exploded perspective view of the system of Figure 2;
Figure 4 is a perspective view of a system/unit in accordance with the invention incorporating climate air distribution box and distribution duct;
Figure 5 is schematic view of a system in accordance with the invention including an air distribution duct or shroud arrangement mounted to (or integrally with) the unit/system.

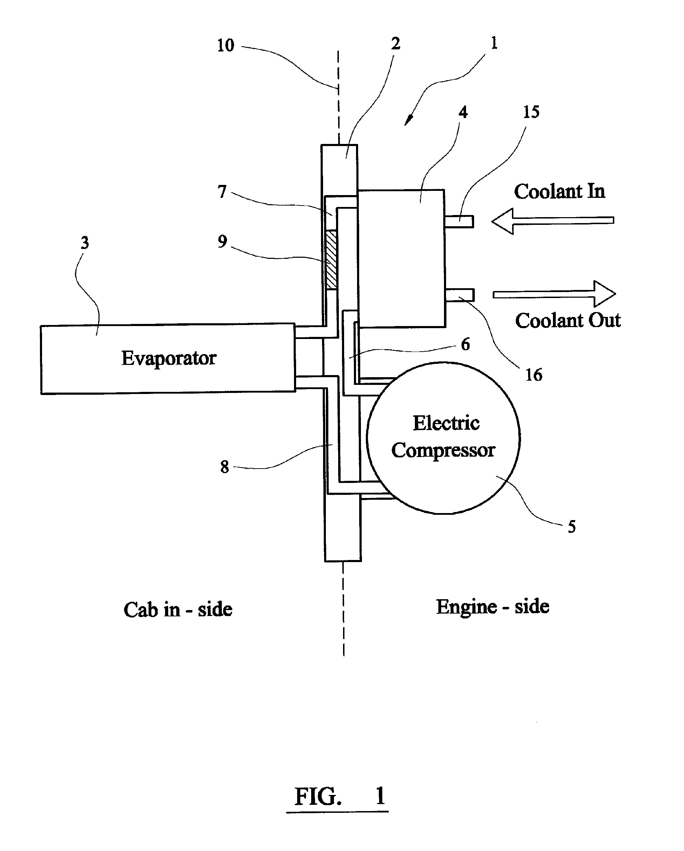

Referring to the drawings, and initially to Figure 1, there is shown a vehicle air conditioning system including a hermetically sealed unit 1 comprising a backplate 2 to which is mounted, to one side, an evaporator 3 and to an obverse side a water cooled condenser 4.

An electrically driven compressor 5 is also mounted to the support platform 2. In Figure 1 the electrical compressor is shown mounted on the same side of the support platform 2 as the water cooled condenser 4 (which is preferred). A less preferred alternative would be for the electric compressor to be mounted on the same side of the support platform 2 as the evaporator 3.

Internally of the support platform 2 is provided a refrigerant flow network comprising flow path lengths 6, 7 and 8 connecting the compressor, condenser and evaporator.

Flow path 6 connects the compressor and the condenser; flow path 7 connects the condenser and evaporator; flow path 8 connects the evaporator and compressor. In the embodiment shown in Figure 1, an orifice tube 9 for control is provided in flow path 7.

The water cooled condenser 4 comprises a series of stacked plates defining alternate galleries containing refrigerant and water coolant respectively. Such water cooled condensers are known in the art. Water coolant inlet port 15 and outlet port 16 provide for water coolant entry into and exit out of the condenser 4.

The unit is typically mounted at the bulkhead 10 between the cabin-side and the engine-side vehicle compartments. A liquid cooled condenser is therefore preferred because the condenser is mounted to the support plate at a position away from air flow in the engine compartment which will be required for an air cooled condenser.

The evaporator 3 is positioned cabin-side of the support platform (and vehicle bulkhead 10). Cabin directed air may pass via the evaporator in a conventional manner for distribution into the vehicle passenger cabin.

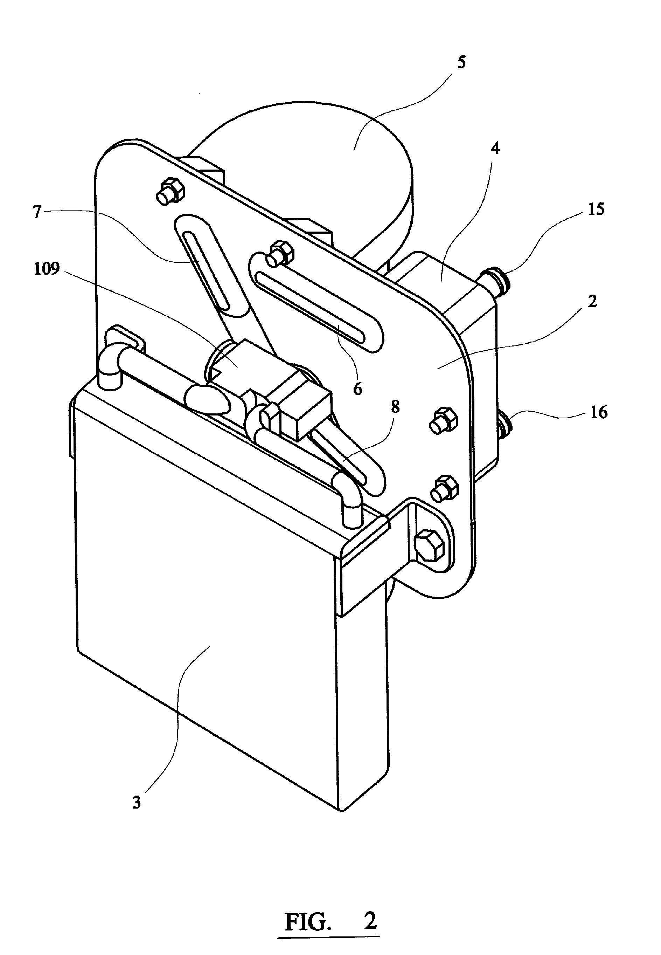

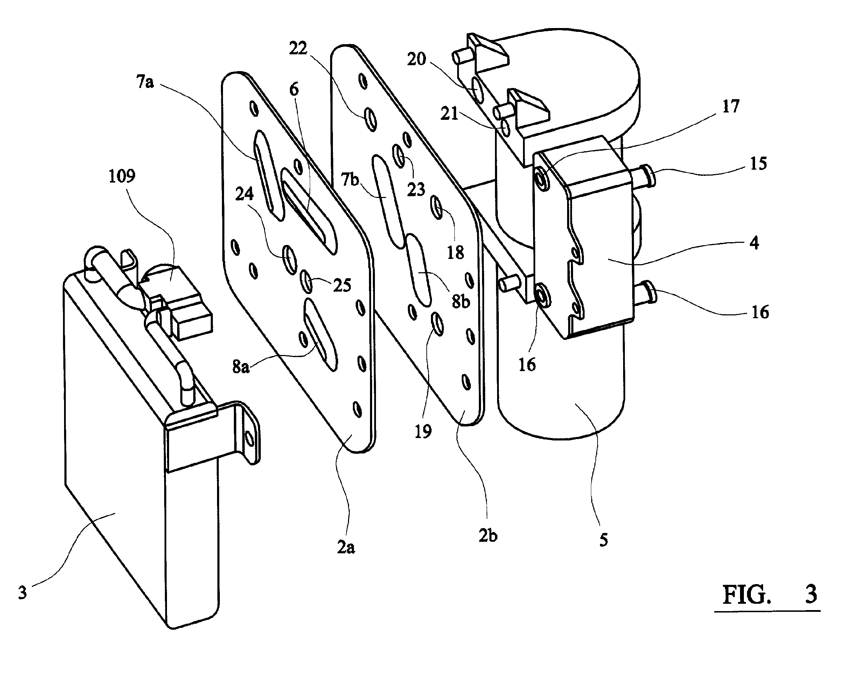

As shown additionally in Figures 2 and 3, the support platform 2 typically comprises a support plate formed from 2 face against face secured plates 2a, 2b which may be secured by bolting (with an appropriate gasket seal provided between, if required).

The plates 2a, 2b are formed with channels or blisters defining the refrigerant flow paths 6, 7, 8. The compressor 5, evaporator 3 and water cooled condenser 4 are bolted to the support platform 2. Fluid communication ports are of course provided mating up with the corresponding portions of the fluid path network including the fluid paths 6, 7, 8. The refrigerant ports for the condenser 4 are condenser ports 16, 17 which mate with apertures 18, 19 to connect with flow paths 6 and 8a respectively. The refrigerant ports for the compressor are ports 20, 21 which mate with apertures 22, 23 to connect with flow paths 7a and 6 respectively. The refrigerant ports exiting from the evaporator (via expansion valve 109) mate with apertures 24, 25 to connect with flow paths 7b and 8b respectively. Flow paths 7 and 8 comprise overlapping channels or blisters 7a, 7b and 8a, 8b formed on opposed facing plates 2a, 2b.

In the embodiments shown in Figures 2 and 3, the orifice tube of the embodiment of Figure 1 is replaced with an expansion valve 109 provided externally of the support plate 2.

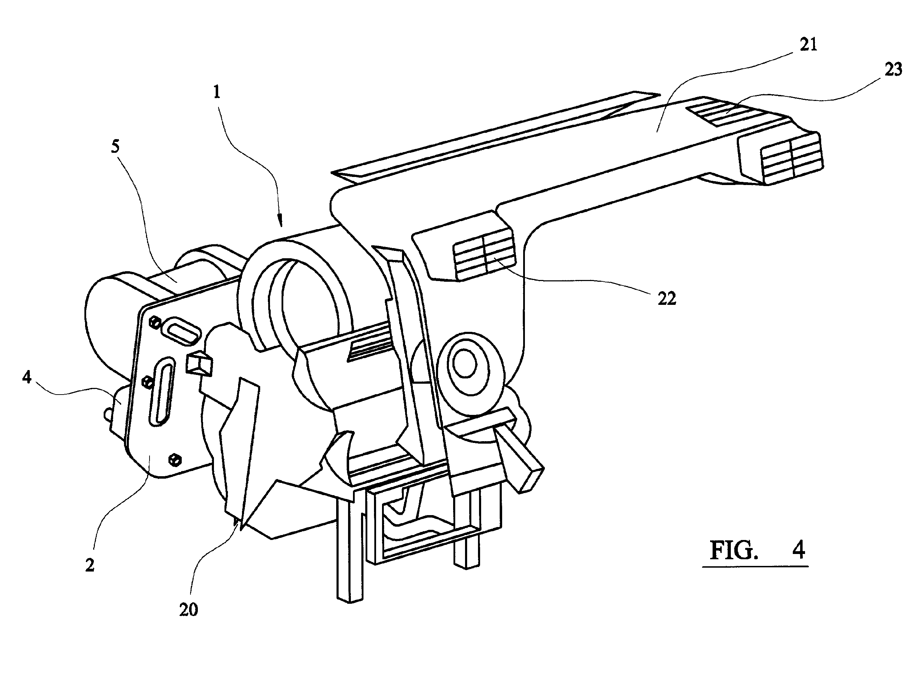

In the embodiment shown in Figure 4, the unit 1 is provided with additional bolt-on components comprising climate air distribution box or shroud 30, and in air communication with the climate air distribution box 30, a cabin air distribution duct 31 including cabin air directed passenger actuatable vents 32, 33.

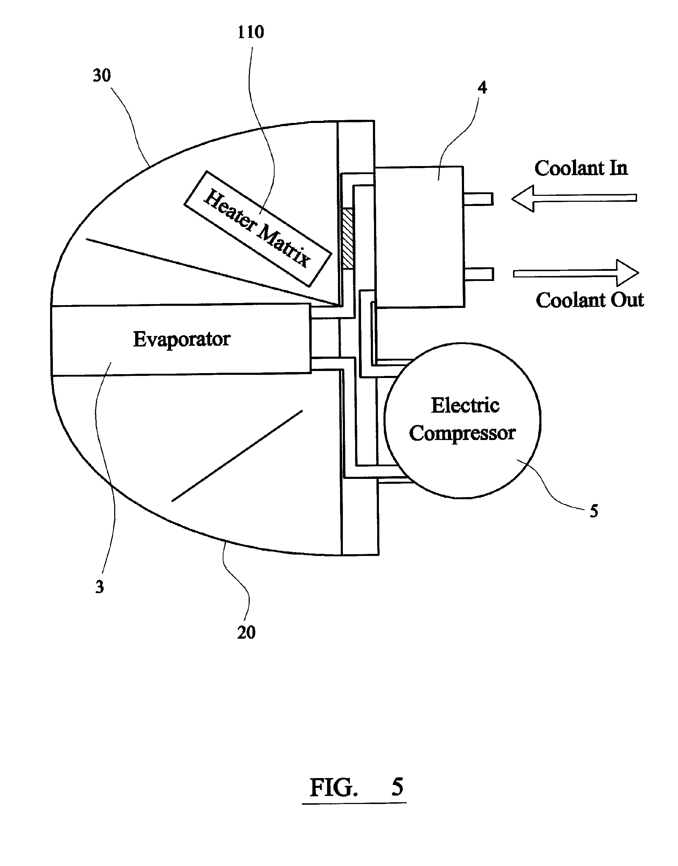

The evaporator is received within the climate system air distribution box 30 which is shown schematically in Figure 5. As shown in Figure 5, the air distribution box 30 may also house additional air conditioning elements such as a heater matrix 110.

The system provides that the evaporator, condenser and electric condenser may be plugged into the support platform and refrigerant flow network provided thereby. This may be done in a factory environment, and the system may be charged with the refrigerant at this point. The overall length of the refrigerant flow path is also minimised with regard to prior art designs which ensures that less refrigerant charge is required compared with conventional systems (such as air cooled condenser systems in which the air cooled condenser must be provided at the forward end of the engine compartment). Joints for use with flexible hoses are also eliminated or minimised. Such joints are a potential source of leaks with conventional systems. Accordingly the risk of loss of refrigerant to the atmosphere during the useful life of the air conditioning system is minimised. Additionally the mounting of the components to the support platform provides a convenient unit for manipulation and fitment and also minimises the overall space envelope of the system. Due to the fact that the unit is bulkhead/firewall mounted, there is a reduced possibility of damage (for example to an air cooled condenser of conventional systems) due to front end impact of the vehicle. The system is suitable for use of all refrigerant gasses/fluids. A significant benefit of the invention is that vehicle manufacturers are able to eliminate refrigerant charging stations from vehicle assembly lines. This has operator and environmental benefits, in addition to production cost benefits.

## Claims

1. A vehicle air conditioning system having a refrigerant circuit comprising a compressor, an evaporator and a condenser, wherein:
i) the refrigerant circuit comprising the compressor evaporator and condenser are pre-assembled as a unit pre-charged with refrigerant and sealed, for fitment in the vehicle; and/or
ii) the refrigerant circuit comprising the compressor, evaporator and condenser are mounted with a common support platform positioned proximal the bulkhead separating the cabin-side and engine compartment-side of the vehicle.

2. A vehicle air conditioning system according to claim 1, wherein the evaporator is positioned cabin-side of the vehicle and the condenser is positioned engine compartment-side of the vehicle.

3. A vehicle air conditioning system according to any preceding claim, wherein:
i) the compressor comprises an electrically driven compressor; and/or
ii) the condenser comprises a liquid cooled condenser (preferably a liquid (water) cooled condenser).

4. A vehicle air conditioning system according to any preceding claim, wherein the refrigerant circuit includes expansion means, provided intermediate the evaporator and condenser, for expansion of the refrigerant.

5. A vehicle air conditioning system according to any preceding claim, wherein the common support platform is provided with refrigerant conduit network to direct refrigerant between the condenser, compressor and evaporator mounted to the support platform.

6. A vehicle air conditioning system according to claim 5, wherein the refrigerant conduit network is formed integrally with the support platform; and/or wherein the refrigerant conduit network is provided internally of the support platform; and/or wherein the refrigerant conduit network is formed by conduit formations provided at the interface between face abutting elements comprising the support platform; and/or wherein the refrigerant conduit network of the support platform includes expansion means for expansion of the refrigerant.

7. A vehicle air conditioning system according to any preceding claim:
i) wherein the support platform is secured to the bulkhead separating the cabin-side from the engine compartment-side of the vehicle; and/or
ii) including a cabin-air flow directing casing or shroud mounted integrally with the unit; and or
iii) including a cabin-air flow directing casing or shroud mounted to the support platform.

8. A method of manufacturing a vehicle air conditioning system comprising:
i) pre-assembling a unit comprising refrigerant circuit including a compressor, evaporator and condenser;
ii) charging the refrigerant circuit with refrigerant and sealing; and
iii) fitting the unit in the vehicle.

9. A method according to claim 8, wherein:
i) coolant connections to the condenser are made during or subsequent to fitment of the unit in the vehicle; and/or
ii) the condenser comprises a liquid cooled condenser the liquid coolant connection being made during or subsequent to fitment of the unit in the vehicle; and/or
iii) the compressor comprises an electrically driven compressor, electrical connection to the compressor being made during or subsequent to fitment of the unit in the vehicle; and/or
iv) the unit is mounted proximate the bulkhead separating the cabin-side and engine compartment-side of the vehicle; and/or
v) the unit includes a common support platform to which the compressor, condenser and evaporator are mounted during pre-assembly of the unit.

10. A method according to claim 9, wherein the support platform is formed from separate facing elements having formations arranged to define a refrigerant conduit flow network when the facing elements are joined in abutment with one another.
